(19) Europäisches Patentamt
European Patent Office
Office européen des brevets

(11) **EP 1 207 691 A2**

(12) **EUROPEAN PATENT APPLICATION**

(43) Date of publication:
**22.05.2002 Bulletin 2002/21**

(51) Int Cl.7: **H04N 5/74**

(21) Application number: **01309767.0**

(22) Date of filing: **20.11.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.11.2000 JP 2000353162**

(71) Applicant: **SEIKO EPSON CORPORATION**
**Tokyo 160-0811 (JP)**

(72) Inventor: **Takeuchi, Kesatoshi**
**Suwa-shi, Nagano-ken 392-8502 (JP)**

(74) Representative: **Tothill, John Paul**
**Frank B. Dehn & Co.**
**179 Queen Victoria Street**
**London EC4V 4EL (GB)**

(54) **Projector and method of correcting image distortion**

(57) The present invention provides a projector (10) that is capable of correcting an image distortion due to off-axis projection of an image in a horizontal direction and in a vertical direction onto a screen. The projector includes: an image distortion adjustment module (50) that adjusts a display video signal, which represents an image to be projected by the projector, according to values of a horizontal correction parameter used for correcting an image distortion in the horizontal direction and a vertical correction parameter used for correcting an image distortion in the vertical direction, so as to correct an image distortion arising in at least one of the horizontal direction and the vertical direction; a two-dimensional input unit (120) that outputs a two-dimensional operation signal, which is mapped to the horizontal correction parameter and to the vertical correction parameter, in response to a user's operation; and a parameter setting module (110) that sets the values of the horizontal correction parameter and the vertical correction parameter in the image distortion adjustment module (50) in response to the two-dimensional operation signal. This arrangement effectively enhances operatability in the process of correcting the image distortion due to off-axis projection.

*Fig.1*

EP 1 207 691 A2

## Description

The present invention relates to a technique of enhancing operatability for correcting image distortion occurring in a projector, especially in the case of off-axis projection.

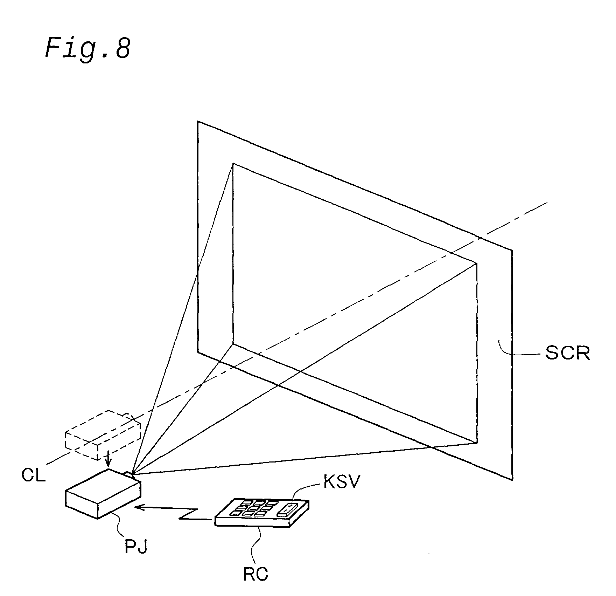

Fig. 8 shows an exemplified configuration for projecting an image onto a screen SCR from a projector PJ. The projector PJ is generally placed at a position vertically deviated from a center axis CL of the screen SCR to project an image on the screen SCR. In the example of Fig. 8, the projector PJ is located at a position deviated downward from the center axis CL (shown by the one-dot chain line) of the screen SCR. The process locating the projector PJ at a position deviated from the center axis CL of the screen SCR and projecting an image is referred to as 'off-axis projection'.

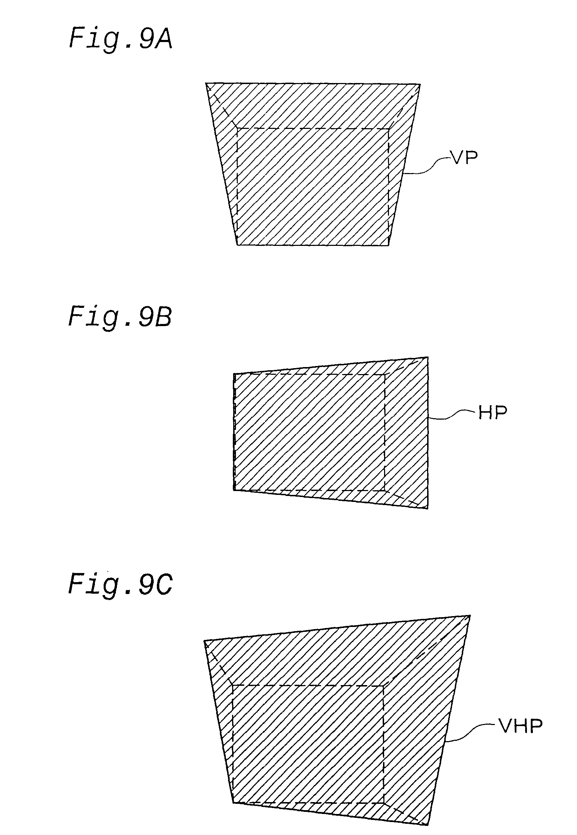

Fig. 9 shows images projected on the screen SCR by off-axis projection. Each dotted rectangle represents the contour of a distortion-free image. Each hatched figure represents an off-axis projected image. In the case of off-axis projection upward or downward (in the vertical direction), a resulting image displayed on the screen SCR has an image distortion of a trapezoidal shape having different lengths of the top side and the bottom side (hereinafter may be referred to as the 'image distortion in the vertical direction'). Fig. 9A shows a distorted image VP in the case of upward off-axis projection. An image of the upside-down shape is displayed in the case of downward off-axis projection.

The projector PJ generally has a correction circuit for correcting such an image distortion in the vertical direction. The user operates a one-dimensional input unit KSV provided on a remote control RC, for example, a volume button consisting of a '+' button and a '-' button to set the value of a vertical correction parameter, while checking the distorted image VP displayed on the screen SCR. The correction circuit corrects the image distortion in the vertical direction according to the preset value of the vertical correction parameter.

The off-axis projection of an image from the projector PJ is not restricted to the off-axis projection upward or downward (in the vertical direction) relative to the center axis CL of the screen SCR. In other cases, the projector PJ may be located at a position deviated leftward or rightward from the center axis CL of the screen SCR to off-axis project the image leftward or rightward (in the horizontal direction). In the case of off-axis projection in the horizontal direction, a resulting image displayed on the screen SCR has an image distortion of a lateral trapezoidal shape having different lengths of the left side and the right side (hereinafter may be referred to as the 'image distortion in the horizontal direction'). Fig. 9B shows a distorted image HP in the case of rightward off-axis projection. An image of the left side-right shape is displayed in the case of leftward off-axis projection.

In the same manner as the correction circuit for correcting the image distortion in the vertical direction, a correction circuit for correcting the image distortion in the horizontal direction is provided independently to correct the image distortion in the horizontal direction. Like the correction circuit for correcting the image distortion in the vertical direction, the correction circuit for correcting the image distortion in the horizontal direction corrects the image distortion in the horizontal direction with a horizontal correction parameter, which is set through a user's operation of the one-dimensional input unit KSV while the user checks the distorted image HP displayed on the screen SCR.

The one-dimensional input unit KSV is generally switched over between the correction in the vertical direction and the correction in the horizontal direction.

In the case of off-axis projection in both the vertical direction and the horizontal direction, a resulting image displayed on the screen SCR has a composite distortion of the image distortion in the vertical direction and the image distortion in the horizontal direction, that is, a tetragonal distorted image VHP having non-parallel four sides as shown in Fig. 9C. Correction of such a composite distortion is attained by first correcting the image distortion in either of the horizontal direction and the vertical direction and subsequently correcting the image distortion in the residual direction. For example, the composite distorted image VHP shown in Fig. 9C is subjected to the correction of the image distortion in the horizontal direction to give the distorted image VP shown in Fig. 9A, and is subsequently subjected to the correction of the image distortion in the vertical direction. The composite distorted image VHP may alternatively be subjected to the correction of the image distortion in the vertical direction to give the distorted image HP shown in Fig. 9B, and be subsequently subjected to the correction of the image distortion in the horizontal direction.

In some cases, after the successive correction of the image distortion in either of the vertical direction and the horizontal direction as the first direction and in the residual direction as the second direction, the user may desire re-correction of the image distortion in the first direction. In such cases, in order to complete correction of the composite distortion of the image distortion in the vertical direction and the image distortion in the horizontal direction, it is required to iteratively carry out correction of the image distortion in the vertical direction and correction of the image distortion in the horizontal direction. The repeated correction of the image distortion in the vertical direction and in the horizontal direction disadvantageously leads to poor operatability.

The object of the present invention is thus to provide a technique that enhances operatability in the process of correcting an image distortion due to off-axis projection of an image in a horizontal direction and in a vertical direction onto a screen.

At least part of the above and the other related objects is attained by a first application of the present invention, which is a projector that is capable of correcting an image distortion due to off-axis projection of an image in a horizontal direction and in a vertical direction onto a screen. The projector includes: an image distortion adjustment module that adjusts a display video signal, which represents an image to be projected by the projector, according to values of a horizontal correction parameter used for correcting an image distortion in the horizontal direction and a vertical correction parameter used for correcting an image distortion in the vertical direction, so as to correct an image distortion arising in at least one of the horizontal direction and the vertical direction; a two-dimensional input unit that outputs a two-dimensional operation signal, which is mapped to the horizontal correction parameter and to the vertical correction parameter, in response to a user's operation; and a parameter setting module that sets the values of the horizontal correction parameter and the vertical correction parameter in the image distortion adjustment module in response to the two-dimensional operation signal.

In response to a user's operation, the two-dimensional input unit outputs the two-dimensional operation signal mapped to the horizontal correction parameter used for correcting the image distortion in the horizontal direction and to the vertical correction parameter used for correcting the image distortion in the vertical direction. The values of the horizontal correction parameter and the vertical correction parameter are specified according to the two-dimensional operation signal and are used to adjust the display image signal, which represents an image to be projected by the projector. This arrangement effectively enhances operability in the process of correcting the image distortion due to off-axis projection of the image in the horizontal direction and in the vertical direction onto the screen.

It is preferable that the parameter setting module varies the values of the horizontal correction parameter and the vertical correction parameter according to a duration of the two-dimensional operation signal output from the two-dimensional input unit.

This arrangement increases the values of the horizontal correction parameter and the vertical correction parameter, for example, when the user continues an identical operation of the two-dimensional input unit to continuously output the two-dimensional operation signal. This desirably shortens the processing time required for correction, thus effectively enhancing the operability of the process of correcting the image distortion due to off-axis projection of the image in the horizontal direction and in the vertical direction onto the screen.

In accordance with one preferable embodiment, the projector further includes a distortion correction window generation module that simultaneously displays an indicator representing a quantity of adjustment of the image distortion in the horizontal direction and an indicator representing a quantity of adjustment of the image distortion in the vertical direction, which depend upon the horizontal correction parameter and the vertical correction parameter set in response to the two-dimensional operation signal.

In response to a user's instruction to correct the image distortion and start the function of image distortion correction, this arrangement enables a composite distortion of the image distortion in the vertical direction and the image distortion in the horizontal direction to be corrected simultaneously, while the user checks the quantity of correction of the image distortion in the vertical direction and the quantity of correction of the image distortion in the horizontal direction shown in the same window. This arrangement thus ensures good operatability.

A second application of the present invention is another projector that is capable of correcting an image distortion due to off-axis projection of an image in a horizontal direction and in a vertical direction onto a screen. The projector includes: a projection unit that projects an image; a menu window generation module that displays a menu option window in response to a user's instruction; a selection setting module that selects a desired menu on the displayed menu option window in response to a user's instruction; a distortion correction window generation module that simultaneously displays an indicator representing a quantity of correction of an image distortion in the horizontal direction and an indicator representing a quantity of correction of an image distortion in the vertical direction, when an image distortion correction process is selected on the displayed menu option window and starts; an image distortion adjustment module that corrects an image distortion with user's settings on the quantity of correction of the image distortion in the horizontal direction and the quantity of correction of the image distortion in the vertical direction; and an image distortion correction termination module that terminates the image distortion correction process in response to a user's instruction.

In the projector given as the second application of the present invention, the image distortion correction process is activated by simply selecting the corresponding menu on the menu option window. When the image distortion correction process is selected, the indicator representing the quantity of correction of the image distortion in the horizontal direction and the indicator representing the quantity of correction of the image distortion in the vertical direction are displayed simultaneously on the same window. This arrangement enables a composite distortion of the image distortion in the vertical direction and the image distortion in the horizontal direction to be corrected simultaneously, while the user checks the quantity of correction of the image distortion in the vertical direction and the quantity of correction of the image distortion in the horizontal direction shown in the same window. The projector given as the second application of the present invention accordingly has good operatability in the process of correction of the image distortion.

A third application of the present invention is a method of correcting an image distortion in a projector through a user's operation of a two-dimensional input unit, where the image distortion occurs in off-axis projection of an image in a horizontal direction and in a vertical direction from the projector onto a screen. The method includes the steps of: specifying values of a horizontal correction parameter used for correction of an image distortion in the horizontal direction and a vertical correction parameter used for correction of an image distortion in the vertical direction, in response to a two-dimensional operation signal output from the two-dimensional input unit; and adjusting a display video signal, which represents an image to be projected by the projector, according to the specified values of the horizontal correction parameter and the vertical correction parameter.

A fourth application of the present invention is a method of correcting an image distortion in a projector due to off-axis projection of an image in a horizontal direction and in a vertical direction onto a screen. The method includes the steps of: displaying a menu option window in response to a user's instruction; simultaneously displaying an indicator representing a quantity of correction of an image distortion in the horizontal direction and an indicator representing a quantity of correction of an image distortion in the vertical direction, when an image distortion correction process is selected on the displayed menu option window in response to a user's instruction and starts; correcting an image distortion with user's settings on the quantity of correction of the image distortion in the horizontal direction and the quantity of correction of the image distortion in the vertical direction; and terminating the image distortion correction process in response to a user's instruction.

The methods of correcting the image distortion in the projector given as the third and the fourth applications of the present invention effectively enhance operatability in the process of correcting the image distortion due to off-axis projection of the image in the horizontal direction and in the vertical direction onto the screen.

These and other objects, features, aspects and advantages of the present invention will now be described with reference to a number of preferred embodiments of the invention which are given by way of example only and with reference to the accompanying drawings, in which:

Fig. 1 is a block diagram illustrating the general structure of a projector in one embodiment of the present invention;
Fig. 2 is an enlarged view illustrating part of a remote control of the projector;
Fig. 3 illustrates a menu window;
Fig. 4 illustrates an image distortion correction window;
Fig. 5 is a flowchart showing an image distortion correction routine;
Fig. 6 is a flowchart showing the details of the process of setting the correction parameters at step S140 in the flowchart of Fig. 5;
Fig. 7 schematically illustrates a two-dimensional operation lever with a lever insertion switch;
Fig. 8 shows an exemplified configuration for projecting an image on a screen SCR from a projector; and
Figs. 9A through 9C show images projected on the screen SCR by off-axis projection.

A. General Structure of Apparatus

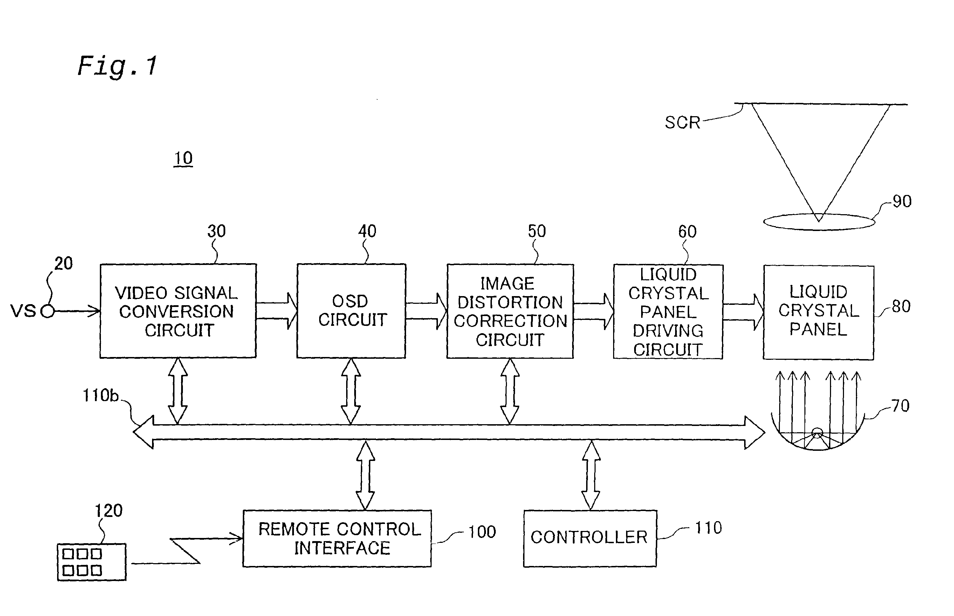

One mode of carrying out the present invention is discussed below as a preferred embodiment. Fig. 1 is a block diagram illustrating the general structure of a projector 10 in one embodiment of the present invention. The projector 10 includes an image input terminal 20, a video signal conversion circuit 30, an on-screen display (OSD) circuit 40, an image distortion correction circuit 50, a liquid crystal panel driving circuit 60, a liquid crystal panel 80, a lighting unit 70, a projection optical system 90, a remote control interface 100, a controller 110, and a remote control 120. The controller 110 is constructed as a microcomputer including a CPU and memories (not shown), and controls the operations of the respective blocks, the video signal conversion circuit 30, the OSD circuit 40, the image distortion correction circuit 50, the lighting unit 70, and the remote control interface 100, via a bus 110b.

The video signal conversion circuit 30 exerts analog-to-digital conversion, decoding, synchronizing signal separation, and image processing functions. More concretely, the video signal conversion circuit 30 converts analog video signals input from the image input terminal 20 into digital video data, and writes the converted digital video data into a frame memory (not shown) included in the video signal conversion circuit 30 or reads the digital video data from the frame memory in synchronism with a synchronizing signal. Diverse series of image processing are carried out in this reading or writing process.

Typical examples of the input analog video signal include RGB signals output from a personal computer and composite video signals output from a video cassette recorder. In the case where the analog video signal is a composite video signal, the video signal conversion circuit 30 demodulates the composite video signal, separates a component video signal consisting of three color signal components RGB from a synchronizing signal included in the composite video signal, and converts the component video signal into digital video data. In the case where the analog video signal is an RGB signal output from the personal computer, on the other hand, the synchronizing signal separation is not required, since the RGB signal is input as a component video signal separately from the synchronizing signal. The video signal conversion circuit 30 thus simply converts the component video signal into digital video data.

The video signal conversion circuit 30 also receives digital video data. In this case, neither the analog-to-digital conversion nor the synchronizing signal separation is required, since the digital video signal is supplied separately from the synchronizing signal.

The video signal conversion circuit 30 has a non-illustrated selection circuit to select one of multiple video signals input from the image input terminal 20. Selection of the video signal is implemented in response to a user's instruction to select a desired image through an operation of the remote control 120.

The OSD circuit 40 generates menu images for correcting image distortion, adjusting picture quality, and setting diverse operating conditions and ornamental images like a pointer image and an underline image (hereinafter these images may also be referred to as 'OSD images') in the form of OSD video signals. The OSD circuit 40 then combines any of the OSD video signals with the video signal output from the video signal conversion circuit 30. The OSD circuit 40 reads OSD data stored in a memory (not shown) incorporated in the OSD circuit 40 to generate the OSD video signal, in response to a user's instruction to display a desired OSD image through an operation of the remote control 120.

In order to correct image distortion (trapezoidal distortion) occurring in the process of off-axis projection of an image from the projector 10, the image distortion correction circuit 50 adjusts the video signal output from the OSD circuit 40 and outputs the adjusted video signal representing a distortion corrected image. The image distortion correction circuit 50 has a horizontal image distortion correction circuit for correcting image distortion due to off-axis projection in a horizontal direction (that is, image distortion in the horizontal direction), and a vertical image distortion correction circuit for correcting image distortion due to off-axis projection in a vertical direction (that is, image distortion in the vertical direction). The horizontal image distortion correction circuit corrects the image distortion in the horizontal direction with a horizontal correction parameter, whereas the vertical image distortion correction circuit corrects the image distortion in the vertical direction with a vertical correction parameter. A variety of commercially available image distortion correction circuits, for example, PW365 (manufactured by Pixelworks Corp.), is applicable for the image distortion correction circuit 50. Settings of the horizontal correction parameter and the vertical correction parameter will be discussed later.

The video signal input from the image input terminal 20 is subjected to diverse series of image processing in the video signal conversion circuit 30, the OSD circuit 40, and the image distortion correction circuit 50 and is output to the liquid crystal panel driving circuit 60. The liquid crystal panel driving circuit 60 generates a driving signal to drive the liquid crystal panel 80 in response to a given video signal. The liquid crystal panel 80 is a light valve (light modulator) that modulates light emitted from the lighting unit 70 according to the driving signal output from the liquid crystal panel driving circuit 60.

The light modulated by the liquid crystal panel 80 is output as light representing an image (image light) by means of the projection optical system 90 towards a screen SCR. A resulting image is accordingly projected on the screen SCR.

The liquid crystal panel driving circuit 60 and the liquid crystal panel 80 correspond to the image formation module of the present invention. The video signal conversion circuit 30, the OSD circuit 40, and the image distortion correction circuit 50 correspond to the image processing module of the present invention. The liquid crystal panel driving circuit 60 may be included in the image processing module, instead of in the image formation module.

Although not being specifically illustrated, the liquid crystal panel 80 consists of three liquid crystal panel elements, which respectively correspond to the three color components R, G, and B. The video signal conversion circuit 30, the OSD circuit 40, the image distortion correction circuit 50, and the liquid crystal panel driving circuit 60 accordingly have the function of processing video signals of the three color components R, G, and B. The lighting unit 70 has a color light separation optical system that separates light emitted from a light source into rays of the three color components. The projection optical system 90 has a composite optical system that combines the rays of the three color components to generate the image light representing a resulting color image. The structure of the optical system in the projector is discussed in detail, for example, in JAPANESE PATENT LAID-OPEN GAZETTE No. 10-171045 disclosed by the applicant of the present invention, and is not specifically described here.

The user operates the remote control 120 to implement various inputs. The signal output from the remote control 120 is input into the controller 110 via the remote control interface 100 to be subjected to a corresponding series of processing.

B. Image Distortion Correction

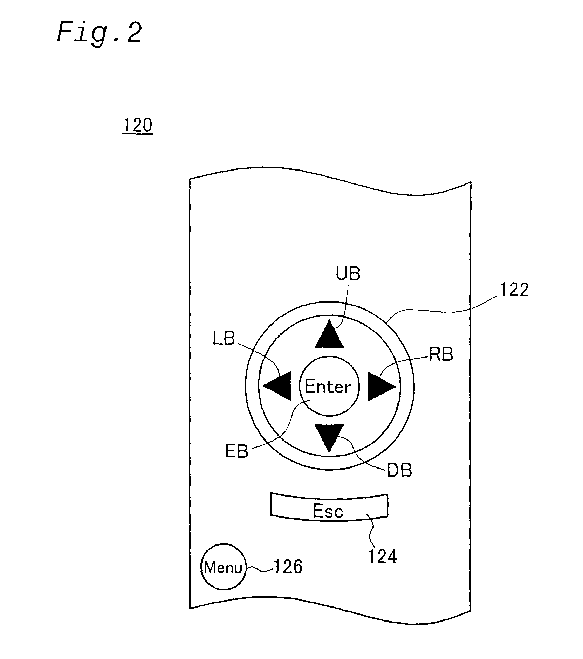

Fig. 2 is an enlarged view illustrating part of the remote control 120. The remote control 120 has a two-dimensional operation button 122, an escape button (Esc) 124, and a menu button (Menu) 126. The two-dimensional operation button 122 includes an up button UB, a down button DB, a left button LB, and a right button RB, which are arranged in a cross. The two-dimensional operation button 122 outputs a two-dimensional operation signal, that is, a first operation signal corresponding to the up button UB and the down button DB and a second operation signal corresponding to the left button LB and the right button RB. The first operation signal is mapped to the vertical correction parameter used for correcting the image distortion in the vertical direction. The second operation signal is mapped to the horizontal correction parameter used for correcting the image distortion in the horizontal direction.

The pressing orientation of the two-dimensional operation button 122 is not restricted to the cross directions but includes oblique directions. For example, a press of the two-dimensional operation button 122 in a right upward direction between the up button UB and the right button RB corresponds to a simultaneous press of the up button UB and the right button RB. The press in another oblique direction exerts similar effects. The values of the horizontal correction parameter and the vertical correction parameter can thus be changed simultaneously by the operation of the two-dimensional operation button 122. A press on the center of the two-dimensional operation button 122, that is, a simultaneous press of all the buttons UB, DB, LB, and RB in the cross directions, corresponds to a press of the enter button (Enter) EB. Namely the operation 'Press the escape button EB' represents a simultaneous press of all the buttons UB, DB, LB, and RB in the cross direction.

The user operates the two-dimensional operation button 122 to set the horizontal correction parameter and the vertical correction parameter. The image distortion correction circuit 50 corrects the image distortion due to off-axis projection with the preset correction parameters. The following describes a process of correcting image distortion.

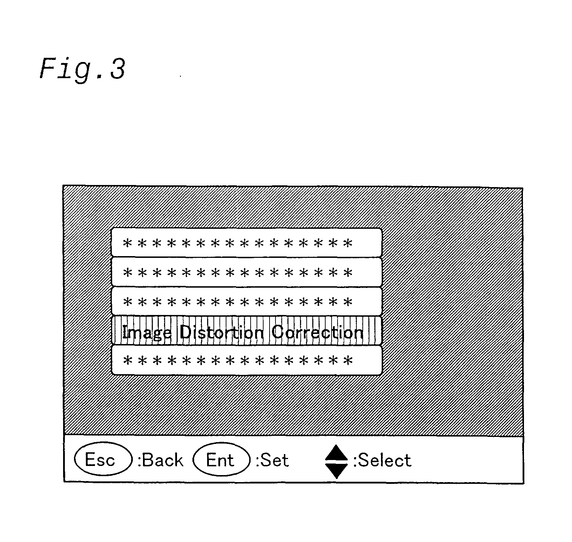

Fig. 3 illustrates a menu window, which is opened by the OSD circuit 40 in response to a user's press of the menu button (Menu) 126 (see Fig. 2) on the remote control 120. The user operates the up button UB and the down button DB in the two-dimensional operation button 122 to select an image distortion correction menu out of enumerated menu options. The OSD circuit 40 opens an image distortion correction window in response to a press of the enter button (Enter) EB.

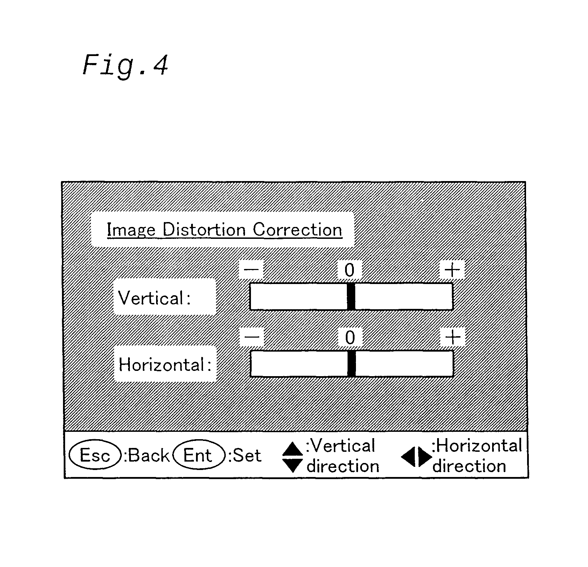

Fig. 4 illustrates an image distortion correction window. The up button UB and the down button DB of the two-dimensional operation button 122 are used to correct the image distortion due to off-axis projection in the vertical direction. A press of the up button UB shifts the scale position on an indicator representing the magnitude of the vertical correction parameter in a '+' direction. This increases the value of the vertical correction parameter and carries out correction to make the upper side of the image greater than the lower side. A press of the down button DB, on the other hand, shifts the scale position on the indicator representing the magnitude of the vertical correction parameter in a '-' direction. This decreases the value of the vertical correction parameter and carries out correction to make the lower side of the image greater than the upper side.

The left button LB and the right button RB of the two-dimensional operation button 122 are used to correct the image distortion due to off-axis projection in the horizontal direction. A press of the right button RB shifts the scale position on another indicator representing the magnitude of the horizontal correction parameter in a '+' direction. This increases the value of the horizontal correction parameter and carries out correction to make the right side of the image greater than the left side. A press of the left button LB, on the other hand, shifts the scale position on the indicator representing the magnitude of the horizontal correction parameter in a '-' direction. This decreases the value of the horizontal correction parameter and carries out correction to make the left side of the image greater than the right side.

As mentioned above, the values of the horizontal correction parameter and the vertical correction parameter can be adjusted simultaneously by pressing the two-dimensional operation button 122 in an oblique direction

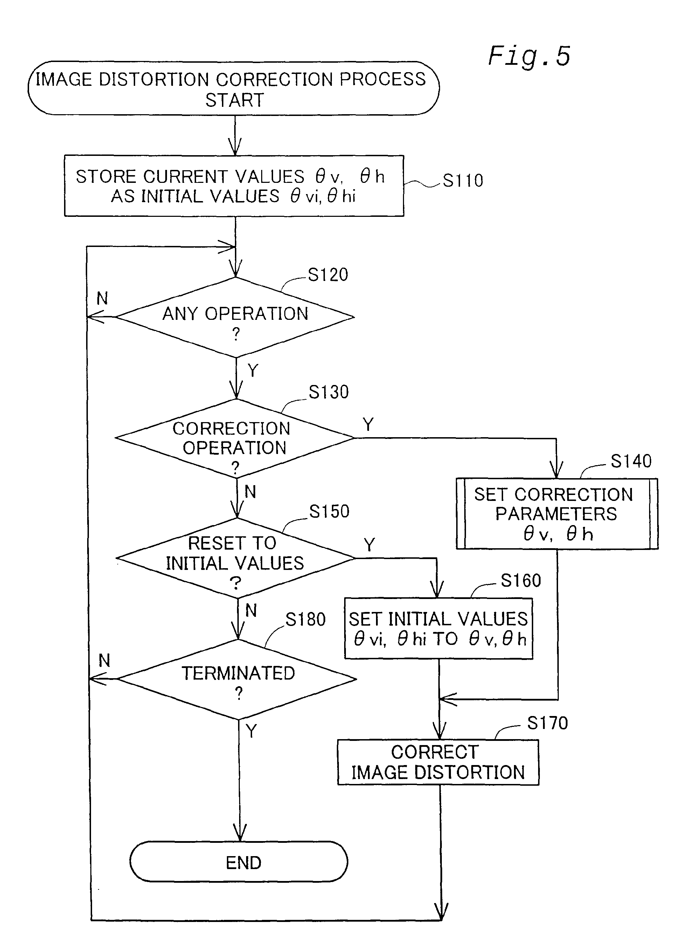

Fig. 5 is a flowchart showing an image distortion correction routine. When the image distortion correction window shown in Fig. 4 is open and the program enters the image distortion correction routine, current settings of a vertical correction parameter $\theta v$ and a horizontal correction parameter $\theta h$ are stored as initial values $\theta vi$ and $\theta hi$ at step S110. The program stands by until a user's operation of the two-dimensional operation button 122 at step S120. In response to any operation of the two-dimensional operation button 122, the program determines whether or not the operation is a correction operation by pressing at least one of the up button UB, the down button DB, the left button LB, and the right button RB at step S130. In the case of a correction operation, the controller 110 sets the values of the vertical correction parameter $\theta v$ and the horizontal correction parameter $\theta h$ at step S140.

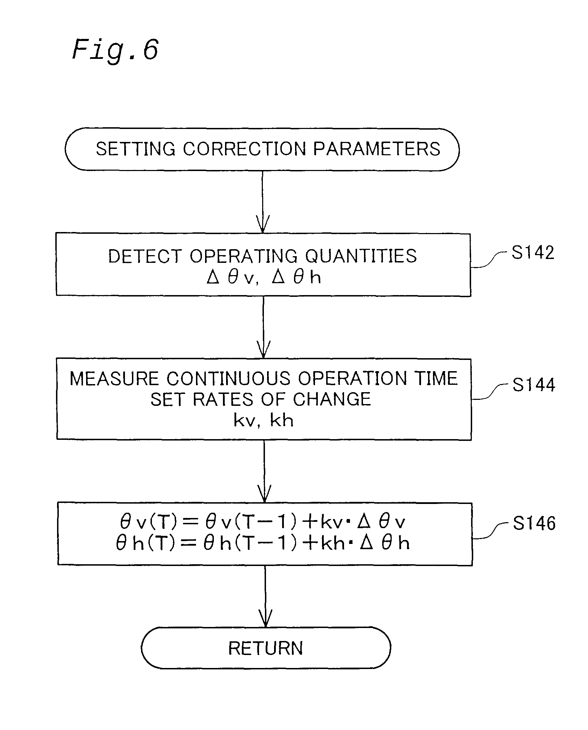

Fig. 6 is a flowchart showing the details of the process of setting the correction parameters at step S140 in the flowchart of Fig. 5. When the user presses the two-dimensional operation button 122, a corresponding two-dimensional operation signal is output from the remote control 120. The two-dimensional operation signal output from the remote control 120 is input into the controller 110 via the remote control interface 100. The controller 110 detects operating quantities for correction $\Delta\theta v$ and $\Delta\theta h$ in the vertical direction and in the horizontal direction corresponding to the input two-dimensional operation signal at step S142. At subsequent step S144, the controller 110 measures a continuous operation time, when the two-dimensional operation button 122 is continuously being pressed, and sets rates of change $kv$ and $kh$ in the vertical direction and in the horizontal direction. The controller 110 then calculates a current vertical correction parameter $\theta v(T)$ and a current horizontal correction parameter $\theta h(T)$ according to equations given below and sets the calculated correction parameters in the image distortion correction circuit 50 at step S146:

$$\theta v(T) = \theta v(T-1) + kv \cdot \Delta\theta v \qquad (1a)$$

$$\theta h(T) = \theta h(T\text{-}1) + kh \cdot \Delta \theta h \qquad (1b)$$

Here T denotes an operation cycle, and θv(T-1) and θh(T-1) denote correction parameters in a previous cycle.

Referring back to the flowchart of Fig. 5, when it is determined at step S130 that the operation is not a correction operation, the program determines at step S150 whether or not the escape button 124 is pressed to reset the correction parameters to the respective initial values, that is, the values prior to the start of the image distortion correction. In the case of an affirmative answer at step S150, the initial values θvi and θhi are set to the correction parameters θv and θh at step S160.

After setting the correction parameters θv and θh at either step S140 or step S160, the image distortion correction circuit 50 actually corrects the image distortion in the vertical direction and in the horizontal direction with the preset vertical correction parameter θv and horizontal correction parameter θh at step S170.

The program then goes back to step S120 to stand by until another operation of the two-dimensional operation button 122. The processing of steps S120 to S170 is iteratively executed until the enter button EB is pressed. This series of processing corrects the image distortion due to off-axis projection in the vertical direction and in the horizontal direction.

At step S180, it is determined whether or not the image distortion correction function is to be terminated. The image distortion correction function is terminated in response to a press of the enter button EB at step S180.

As described above, the technique of the embodiment utilizes the two-dimensional operation button 122 for correction of the image distortion. A press of the two-dimensional operation button 122 in an oblique direction outputs the two-dimensional operation signal, which is mapped to the vertical correction parameter used for correcting the image distortion in the vertical direction and to the horizontal correction parameter used for correcting the image distortion in the horizontal direction. This arrangement thus enables the correction of the image distortion in the vertical direction and the correction of the image distortion in the horizontal direction to be carried out simultaneously. This technique does not require the alternate iteration of the correction in the vertical direction and the correction in the horizontal direction, which is carried out in the prior art procedure, thus desirably enhancing the operatability in the process of correcting the image distortion.

As clearly understood from the above description, the OSD circuit 40 corresponds to the distortion correction window generation module and the menu window generation module of the present invention. The controller 110 corresponds to the selection setting module, the parameter setting module, and the image distortion correction termination module of the present invention. The image distortion correction circuit 50 corresponds to the image distortion adjustment module of the present invention.

Setting the rates of change kv and kh according to the continuous operation time of the two-dimensional operation button 122 results in varying the values of the correction parameters θv and θh as clearly understood from Equations (1a) and (1b) given above. Increasing the rates of change kv and kh according to the continuous operation time thus shortens the operation time required for correcting the image distortion. The rates of change kv and kh may alternatively be fixed, irrespective of the continuous operation time.

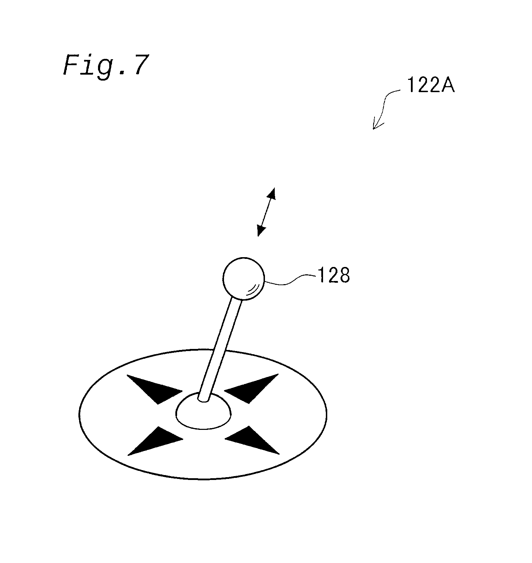

In the above embodiment, the two-dimensional operation button 122 is used as the two-dimensional input unit of the present invention. The two-dimensional input unit is, however, not restricted to the two-dimensional operation button 122. In this embodiment, a press of the center of the two-dimensional operation button 122 exerts the function of the enter button EB. Another two-dimensional operation button or a two-dimensional operation lever without this function may be used for the two-dimensional operation button 122. In this case, it is desirable that the enter button EB is separately provided. Another applicable example is a two-dimensional operation lever with a lever insertion switch. Fig. 7 schematically illustrates a two-dimensional operation lever 122A with a lever insertion switch. The two-dimensional operation lever 122A with the lever insertion switch outputs a two-dimensional operation signal in response to inclination of an operation lever 128 up, down, left, right, or in any oblique direction. The operation lever 128 has the lever insertion switch, which corresponds to the enter button EB of the two-dimensional operation button 122. A press-down action (that is, insertion) of the operation lever 128 corresponds to the press of the enter button EB. Namely any two-dimensional input unit is usable as long as it can output a two-dimensional operation signal mapped to the vertical correction parameter and to the horizontal correction parameter.

In the above embodiment, the remote control 120 is provided with the two-dimensional input unit. The projector main body, instead of the remote control, may alternatively be provided with the two-dimensional input unit.

The present invention is not restricted to the above embodiment, but there may be many modifications, changes, and alterations without departing from the scope of the main characteristics of the present invention.

The scope of the present invention is indicated by the appended claims, rather than by the foregoing description.

**Claims**

**1.** A projector (10) that is capable of correcting an image distortion due to off-axis projection of an image in a horizontal direction and in a vertical direction onto a screen, the projector (10) comprising:

an image distortion adjustment module (50) that adjusts a display video signal, which represents an image to be projected by the projector (10), according to values of a horizontal correction parameter used for correcting an image distortion in the horizontal direction and a vertical correction parameter used for correcting an image distortion in the vertical direction, so as to correct an image distortion arising in at least one of the horizontal direction and the vertical direction;

a two-dimensional input unit (120) that outputs a two-dimensional operation signal, which is mapped to the horizontal correction parameter and to the vertical correction parameter, in response to a user's operation; and

a parameter setting module (110) that sets the values of the horizontal correction parameter and the vertical correction parameter in the image distortion adjustment module (50) in response to the two-dimensional operation signal.

2. A projector (10) in accordance with claim 1, wherein the parameter setting module (110) varies the values of the horizontal correction parameter and the vertical correction parameter according to a duration of the two-dimensional operation signal output from the two-dimensional input unit (120).

3. A projector (10) in accordance with claim 1 or claim 2, the projector (10) further comprising:

a distortion correction window generation module (40) that simultaneously displays an indicator representing a quantity of adjustment of the image distortion in the horizontal direction and an indicator representing a quantity of adjustment of the image distortion in the vertical direction, which depend upon the horizontal correction parameter and the vertical correction parameter set in response to the two-dimensional operation signal.

4. A projector (10) that is capable of correcting an image distortion due to off-axis projection of an image in a horizontal direction and in a vertical direction onto a screen, the projector (10) comprising:

a projection unit that projects an image;

a menu window generation module (40) that displays a menu option window in response to a user's instruction;

a selection setting module (110) that selects a desired menu on the displayed menu option window in response to a user's instruction;

a distortion correction window generation module (40) that simultaneously displays an indicator representing a quantity of correction of an image distortion in the horizontal direction and an indicator representing a quantity of correction of an image distortion in the vertical direction, when an image distortion correction process is selected on the displayed menu option window and starts;

an image distortion adjustment module (50) that corrects an image distortion with user's settings on the quantity of correction of the image distortion in the horizontal direction and the quantity of correction of the image distortion in the vertical direction; and

an image distortion correction termination module that terminates the image distortion correction process in response to a user's instruction.

5. A method of correcting an image distortion in a projector through a user's operation of a two-dimensional input unit, where the image distortion occurs in off-axis projection of an image in a horizontal direction and in a vertical direction from the projector onto a screen, the method comprising the steps of:

specifying values of a horizontal correction parameter used for correction of an image distortion in the horizontal direction and a vertical correction parameter used for correction of an image distortion in the vertical direction, in response to a two-dimensional operation signal output from the two-dimensional input unit; and

adjusting a display video signal, which represents an image to be projected by the projector, according to the specified values of the horizontal correction parameter and the vertical correction parameter.

6. A method of correcting an image distortion in a projector due to off-axis projection of an image in a horizontal direction and in a vertical direction onto a screen, the method comprising the steps of:

displaying a menu option window in response to a user's instruction;

simultaneously displaying an indicator representing a quantity of correction of an image distortion in the horizontal direction and an indicator representing a quantity of correction of an image distortion in the vertical direction, when an image distortion correction process is selected on the displayed menu option window in response to a user's instruction and starts;

correcting an image distortion with user's settings on the quantity of correction of the image distortion in the horizontal direction and the quantity of correction of the image distortion in the vertical direction; and
terminating the image distortion correction process in response to a user's instruction.

Fig. 1

Fig.2

Fig.3

```
* * * * * * * * * * * * * * *

* * * * * * * * * * * * * * *

* * * * * * * * * * * * * * *

Image Distortion Correction

* * * * * * * * * * * * * * *
```

( Esc ):Back ( Ent ):Set  ▲▼ :Select

## Fig.4

Image Distortion Correction

Vertical: − 0 +

Horizontal: − 0 +

(Esc):Back (Ent):Set ▲▼:Vertical direction ◀▶:Horizontal direction

*Fig.5*

```
┌─────────────────────────────────────┐
│  IMAGE DISTORTION CORRECTION PROCESS │
│               START                  │
└─────────────────────────────────────┘
                  │
                  ▼
┌─────────────────────────────────────┐
│  STORE CURRENT VALUES θv, θh         │── S110
│  AS INITIAL VALUES θvi, θhi          │
└─────────────────────────────────────┘
```

S120 — ANY OPERATION ?  → N

S130 — CORRECTION OPERATION ? → Y

S140 — SET CORRECTION PARAMETERS θv, θh

S150 — RESET TO INITIAL VALUES ? → Y

S160 — SET INITIAL VALUES θvi, θhi TO θv, θh

S170 — CORRECT IMAGE DISTORTION

S180 — TERMINATED ? → N / Y

END

Fig.6

```
┌────────────────────────────────────────┐
│    SETTING CORRECTION PARAMETERS        │
└────────────────────────────────────────┘
                    │
                    ▼
┌────────────────────────────────────────┐
│    DETECT OPERATING QUANTITIES          │──── S142
│         Δθv, Δθh                        │
└────────────────────────────────────────┘
                    │
                    ▼
┌────────────────────────────────────────┐
│  MEASURE CONTINUOUS OPERATION TIME      │──── S144
│       SET RATES OF CHANGE               │
│            kv, kh                        │
└────────────────────────────────────────┘
                    │
                    ▼
┌────────────────────────────────────────┐
│   θv(T)=θv(T−1)+kv·Δθv                   │──── S146
│   θh(T)=θh(T−1)+kh·Δθh                   │
└────────────────────────────────────────┘
                    │
                    ▼
            ┌──────────────┐
            │    RETURN     │
            └──────────────┘
```

Fig.7

122A

128

Fig.8

SCR

CL

KSV

PJ

RC

*Fig.9A*

VP

*Fig.9B*

HP

*Fig.9C*

VHP